# EUROPÄISCHE PATENTSCHRIFT

(11) **EP 1 886 793 B1**
(45) Veröffentlichungstag und Bekanntmachung des Hinweises auf die Patenterteilung: **02.03.2011**
(21) Anmeldenummer: 07015802.7
(22) Anmeldetag: 10.08.2007
(51) Int. Cl.: B29C 67/00

(54) **Verfahren und Vorrichtung zur Herstellung eines dreidimensionalen Gegenstandes sowie Verwendung einer Plastifiziereinheit zu dessen Herstellung**
Method and device for manufacturing a 3D object and use of a plastifying unit for its manufacture
Procédé et dispositif destinés à la fabrication d'un objet en trois dimensions et utilisation d'une unité plastifiée pour sa fabrication

(30) Priorität: 11.08.2006 DE 102006037927
(43) Veröffentlichungstag der Anmeldung: 13.02.2008
(73) Patentinhaber: Hehl, Karl, 72290 Loßburg (DE)
(72) Erfinder: Hehl, Karl, 72290 Loßburg (DE)
(74) Vertreter: Reinhardt, Harry

(56) Entgegenhaltungen:
- US-A1- 2002 111 707

## Beschreibung

### Gebiet der Erfindung

Die Erfindung betrifft ein Verfahren und eine Vorrichtung zur Herstellung eines dreidimensionalen Gegenstandes durch sequentielles Aufbringen von Teilen eines verfestigbaren Materials nach dem Oberbegriff der Ansprüches1 und 16 sowie eine Verwendung einer Plastifiziereinheit für dieses Verfahren nach dem Oberbegriff des Anspruches 14.

### Stand der Technik

In der Kunststoffteileherstellung ist bekannt, durch Spritzgießen oder Extrudieren in großen Losgrößen und Serien Teile herzustellen. Der Vorteil des Kunststoff-Spritzgießens beruht insbesondere auf der hochgenauen Herstellung von komplexen Teilgeometrien, wobei die Funktionsvielfalt des Spritzgießverfahrens in optimaler Weise die Anforderungen an eine kostengünstige und wirtschaftliche Produktion von Kunststoffteilen abdeckt.

Gleichzeitig wächst mehr und mehr ein Bedarf nach Kunststoffteilen für Stückzahl 1 und kleine Losgrößen, wie z.B. Musterteile mit der Anforderung einer sehr kurzzeitigen Bereitstellung sowie Eigenschaften, die denen von spritzgegossenen Teilen ähnlich sind. Zur Herstellung solcher Teile gibt es Fertigungsverfahren, die weitläufig unter dem Begriff Prototyping bekannt sind. Die Herstellung solcher Teile beruht in den meisten Fällen auf der Erzeugung der Geometrie aus 3D-Daten. Diese Geometrien werden in unterschiedlichster Form durch entsprechende Mittel wie Aufschmelzen von Pulverschichten durch Wärmeeintrag, z.B. mit Laser, generative Systeme wie Druckverfahren in unterschiedlicher verbindender Form der Pulverteile oder auch im sogenannten Schmelzstrangverfahren hergestellt.

Aus dem dem Obergebriff der unabhängigen Ansprüche zugrunde liegenden Patent US 5,136,515 A ist es bekannt, Tropfen aus zwei Austragseinheiten zum Aufbaue eines dreidimensionalen Gegenstand auszubringen. Das eine Material dient als Stützmaterial und wird später bedarfsweise ausgetrieben oder ausgelöst, das andere Material wird für den Gegenstand verwendet. Die Tropfen werden als zweidimensionale Schichten aus den beiden Materialien aufgetragen. Verwendet werden dazu verschiedene Wachs.

Aus der DE 696 26 131 oder der US 5,656,230 ist es z.B. bekannt, kontinuierlich Material einer Aufbereitungseinheit zuzuführen, in der das strangförmige Material zur Vorwärtsbewegung unter Druck gesetzt wird. Das Material wird extrudiert und als ununterbrochener Strom sequentiell, mustermäßig abgesetzt. Das Bilden von Tropfen ist nicht vorgesehen.

Aus der WO 03/089222 A1 ist ein Verfahren zum schnellen Prototypen-Spritzgießen bekannt, bei dem eine Form aus Kunststoff geformt wird, in die dann ein anderer Kunststoff unter isothermen Bedingungen eingefüllt wird. Mit einem kunststofftechnischen Erzeugen von Tropfen hat dies nichts zu tun.

Aus der WO 95/05943 ist ein dem Tintenstrahldruck ähnliches Prinzip bekannt, bei dem einzelne Tropfen aus einem Material abgesetzt werden. Das Absetzen der Tropfen erfolgt unter Einsatz bekannter Piezowandler, wobei Material ,siphonartig' aus einem Vorratsbehälter nachgefördert wird. Das am Druckkopf anstehende Material steht damit nicht unter Druck.

Nach einem ähnlichen Prinzip arbeiten die Verfahren nach den US-Patenten 6,850,334 B1 und 6,658,314 B1, bei dem photopolymere Materialien nach dem Prinzip eines Tintenstrahldrucker gedruckt und anschließend belichtet werden. Zu diesem Umfeld gehören viele Anmeldungen, die sich mit der Ausgestaltung zugehöriger Druckköpfe und der Beseitigung von dabei entstehenden Problemen beschäftigen (z.B. US 6,259,962 B1, WO 00/52624 A1, WO 00/76772 A1, WO 01/26023 A1, WO 01/53105 A2, WO 2004/044816 A1, WO 2004/050323 A1, WO 2004/096514 A2, WO 2004/096527 A2, WO 2005/053928 A2, EP 1 637 307 A2 oder DE 199 31 112 A1).

Mit dem Prinzip, wie am besten monodisperse Tropfen möglichst gleicher Teilchengröße durch piezoelektrische Schwingungserzeuger erzeugt werden können, beschäftigen sich insbesondere die DE 100 13 451 A1 und DE 100 13 450 B4 oder auch die DE 196 26 428 A1 und die DE 200 05 997 U1. Dies hat jedoch mit einer kunststofftechnischen Erzeugung von Tropfen nichts gemein.

Aus der WO 2004/062892 A2 ist ein Drucken von Binder in eine Pulverschicht unter verschiedener Tröpfchengröße bekannt, um dadurch ebenfalls im Rapid Prototyping einen Prototyp zu erstellen.

US-A-20020111707 offenbart ein Verfahren gemäß dem Oberbegriff des Anspruchs 1 und eine Vorrichtung gemäß dem Oberbegriff des Anspruchs 16.

### Offenbarung der Erfindung

Ausgehend von diesem Stand der Technik liegt der vorliegenden Erfindung die Aufgabe zugrunde, unter Verwendung kunststofftechnischer Ansätze ein alternatives Verfahren und eine alternative Vorrichtung zur Herstellung eines dreidimensionalen Gegenstandes zur Verfügung zu stellen.

Diese Aufgabe wird durch ein Verfahren und eine Vorrichtung zur Herstellung eines dreidimensionalen Gegenstandes mit den Merkmalen der Ansprüche 1 und 16 sowie durch eine Verwendung einer Plastifiziereinheit für diese Herstellung mit den Merkmalen des Anspruches 14 gelöst.

Die Lösung macht sich den Ansatz zunutze, dass plastifiziertes oder plastifizierbares Material wie aufgeschmolzener Kunststoff in kleinster Ausbringungsform wie z.B. Tropfenform im Flüssigzustand durch entsprechende Aneinanderreihung dieser tropfenförmigen Teile zu entsprechenden Geometrien aneinander bzw. aufeinander gereiht werden kann, sofern es gelingt mit den in der Spritzgießtechnik verwendeten Einrichtungen und Materialien, die in der fluiden Phase einen sogenannten laminaren Quellfluss aufweisen, einen diskontinuierlichen Tropfen zielgerecht zu erzeugen. Die Gestaltung der Tropfenausbildung erfolgt nach kunststofftechnischen Grundsätzen mittels einer Plastifiziereinheit, die an einen unter Druck stehenden Materialspeicher mit taktbarer Austragseinheit angekoppelt ist. Durch den für die Verarbeitung dieser Materialien erforderlichen Druck auf die fluide Phase im Materialspeicher, wird in Abhängigkeit der Parameter Druck und Temperatur im Materialspeicher als auch in Abhängigkeit von Öffnungszeit und Geometrie der taktbaren Austragseinheit ein diskontinuierlicher Tropfen erzeugt. Bereits dadurch können verschiedenste Parameter zur Gestaltung der Tropfenform und damit des Gegenstands beeinflusst werden.

Dies gilt aber umso mehr, wenn die Einflussparameter des Verfahrens insgesamt kunststofftechnisch genau betrachtet werden. Die Vielzahl der Einflussparameter, die gegebenenfalls miteinander im Wirkverbindung stehen, können mit dem kunststofftechnischen Know How gezielt beeinflusst werden. Durch diese Art der Aufbereitung des Materials und die Art der Ausbringung ist man weitestgehend vom Ausgangsmaterial unabhängig und damit in der Lage, die am Markt befindlichen Kunststoffe auf einfachste Art, wie z.B. beim Spritzgießen aufzubereiten. Damit entfällt die Abhängigkeit von Spezialmaterialien oder Verbundwerkstoffen. Durch den Einsatz eines breiten Werkstofffeldes können damit gemäß den konkreten Anforderungen Teile in den entsprechenden Werkstoffen, Güten und Anforderungen hergestellt werden. Werden zudem die Parameter von Aufbereitungseinheit, Materialspeicher, Austragseinheit, Verschlussmittel und Bauraum entsprechend beeinflusst, lassen sich Gegenstände mit hoher Präzision herstellen. Im Bauraum werden die Tropfen als flüssige Teilchen zur Erzeugung des Gegenstand auf- und aneinander gesetzt, wobei der flüssige Zustand auch zur Verbindung der Teile von Vorteil ist.

Vorzugsweise ist die an den Materialspeicher gekoppelte Plastifiziereinheit zugleich auch das Mittel, das den Druck im Materialspeicher erzeugt. Da zur Aufbereitung von in der Spritzgießtechnik verarbeiteten Materialien meist ohnehin ein entsprechender Druck erforderlich ist, kann diese Eigenschaft der Plastifiziereinheit auch für den Druck im Materialspeicher ohne Mehraufwand genutzt werden.

Werden Mehrfacheinsätze von Aufbereitungs-, Druckerzeugungs- und Austragseinheit, zumindest aber die mehrere Austragseinheiten verwendet, kann der Objektaufbau auch in Mehrkomponentenverfahren erfolgen. Dabei können bedarfsweise verschiedene Materialien so ausgebracht werden, dass sie sich am Auftreffpunkt mischen, ohne sich zu entmischen. Grenzbereiche von unterschiedlichen Werkstoffen sind mit diesem Verfahren sehr effizient zu verwirklichen. Dies gilt z.B. auch für die Verwendung reaktiver Mehrkomponenten wie z.B. Zwei-Komponenten-Silikon oder Polymerblends.

Weitere Vorteile ergeben sich aus den Unteransprüchen und der nachfolgenden Beschreibung.

### Kurzbeschreibung der Figuren

Im Folgenden wird die Erfindung anhand eines in den Figuren dargestellten Ausführungsbeispiels näher erläutert. Es zeigen:
- Fig. 1: einen schematischen Plan einer erfindungsgemäße Vorrichtung,
- Fig. 2: den Verfahrensablauf mit den möglichen Einflussparametern.

### Beschreibung bevorzugter Ausführungsbeispiele

Bevor die Erfindung im Detail beschrieben wird, ist darauf hinzuweisen, das sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

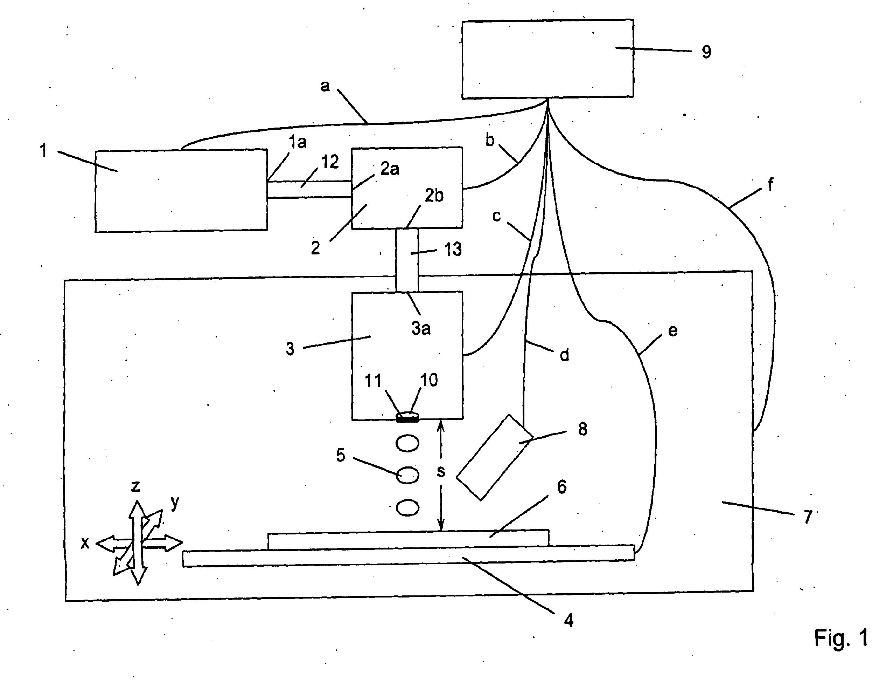

Figur 1 zeigt schematisch eine Vorrichtung zur Herstellung eines dreidimensionalen Gegenstandes 6, von dem im Ausführungsbeispiel bis jetzt lediglich wenige Schichten zu erkennen sind, die auf einem Objektträger 4 im Bauraum 7 aufgebaut werden. Die Herstellung des Gegenstandes 6 erfolgt durch sequentielles Aufbringen von diskontinuierlichen Tropfen 5 eines verfestigbaren Materials. Das verfestigbare Material ist ein plastifiziertes Material wie z.B. Silikon oder ein plastifizierbares Material wie Kunststoff oder auch pulverförmige Materialien. Das verfestigbare Material liegt entweder im Ausgangszustand als Fluid vor oder kann verflüssigt werden. Das Material kann ein unter Wärme reversibel aufschmelzbares und damit recyclebares Material sein. Beliebige andere Materialien können verwendet werden, sofern diese Materialien durch die Vorrichtung plastifizierbar und vor allem durch die wenigstens eine Austragseinheit 3 austragbar sind.

Das verfestigbare Material weist in der fluiden Phase einen sogenannten laminaren Quellfluss auf. In den Quellfluss geht u.a. die Anlagerung der Schmelze an der Wandung ein. Dies wird am deutlichsten bei einem Blick in die Erkenntnisse der Spritzgießtechnik. Bei der Formfüllung eines einfachen, rechteckigen Kanals wird die Schmelze über einen sogenannten Angusspunkt eingespritzt und beginnt sich von diesem Punkt mit geschlossenen Fließfronten kreisförmig auszubreiten, bis sie die gesamte Breite der Kavität ausfüllt. Einige Zeit danach kann der Bereich zwischen dem Einlauf und der Fließfront als nahezu ausgebildet betrachtet werden. An der Fließfront selbst herrscht eine besondere Strömungssituation, der "Quellfluss", da die Stromlinien in diesem Bereich wie eine Quelle erscheinen, wenn man sie in Bezug auf ein mitbewegtes Koordinatensystem betrachtet. Zwischen zwei den Kavitätsoberflächen nahe liegenden, rasch erstarrten Masseschichten fließt die Schmelze, wobei sie in der Mitte der Kavität mit größeren Geschwindigkeiten zur Fließfront hin schreitet. Kurz bevor die Schmelze die Fließfront erreicht, reduziert sich ihre Geschwindigkeitskomponente in Fließrichtung, sie fließt schräg zur Wand, bis sie sich an die Wand anlegt.

Der laminare Quellfluss ist für die Erzeugung von auf den Bauraum 'ausgerichteten' Tropfen auf Grund seiner laminaren Ausbildung einerseits von Vorteil, andererseits bestehen vor allem bei der Ausbildung kleiner Tropfen genau hier auch die Probleme, die eine Umsetzung mit aus der Spritzgießtechnik bekannten Einrichtungen und Materialien erschweren. Die Wandhaftung führt dazu, dass sich die Massen nur schwer zu Tropfen mit gewünschten kleinen Volumen, vorzugsweise im Bereich vom 1 mm³ und gewünschter Fluggeschwindigkeit ausbilden lassen, andererseits ist eine entsprechend hohe Viskosität des Materials gerade für die Ausbildung einer geeigneten Tropfenform eines diskontinuierlichen Tropfens von Bedeutung.

Dies unterscheidet die verwendeten Materialien auch von den vorbekannten Wachsen. Aufgrund ihrer Viskosität lassen sich Wachse im normalen Thermodruck- oder Inkjetverfahren ausbringen, also durch reines kinematisches, druckloses Beschleunigen ohne Druckdifferenz des aufgeschmolzenen Tropfens. Die hier verwendeten Materialien unterscheiden sich hiervon bereits dadurch, dass ihre Viskositätszahl um eine bis mehrere Zehnerpotenzen höher ist. So liegt die dynamische Viskositätszahl des verfestigbaren Materials zwischen 100 und 10000 [Pa s], wobei vorzugsweise das verfestigbare Material ein in der Spritzgießtechnik üblicher Kunststoff oder ein Harz ist. Dies macht die Verarbeitung aus einem unter Druck setzbaren Materialspeicher erforderlich, da Drücke von mehr als 10 bis 100 MPa (100 bis.1000 bar) ohne weiteres erforderlich sind, insbesondere wenn zur Erzielung kleiner Tropfenvolumen kleine Austragsöffnungen eingesetzt werden.

Vorzugsweise liegt das gewünschte Volumen des Tropfens 5 insbesondere im Bereich von 0,01 bis 0,5 mm³, vorzugsweise im Bereich von 0,05 bis 0,3 mm³ und besonders vorzugsweise im Bereich von etwa 0,1 mm³. Der Durchmesser der Austrittsöffnung 10 ist insbesondere kleiner gleich 1 mm, vorzugsweise etwa 0,1 mm ist. Bei einer durchaus üblichen Einspritzgeschwindigkeit von 100 [ccm/s], die durch einen sogenannten Punktanguss mit 0,1 [mm] Durchmesser die Masse fördert, ergibt sich mit Volumenstrom durch Fläche ein Wert von 10.000 [m/s]. Dies führt für die fluide Phase zu einem laminaren Quellfluss mit Fliessgeschwindigkeiten bis zu 10.000 m/s.

In wenigstens einer Aufbereitungseinheit wird das Material aufbereitet und homogenisiert, wobei dafür eine in der Spritzgießtechnik an sich bekannte Plastifiziereinheit 1 zur Plastifizierung des verfestigbaren Materials bzw. zur Aufbereitung des verfestigbaren Materials als plastifiziertes oder plastifizierbares Material verwendet wird. Das so aufbereitete Material gelangt über den Ausgang 1 a und die Leitung 12 zu Eingang 2a einer Druckerzeugungseinheit, die im Folgenden als Materialspeicher 2 angesprochen wird. In diesem Materialspeicher 2 wird das von der Aufbereitungseinheit 1 aufbereitete Material einerseits gespeichert und andererseits auch unter Druck gesetzt. Über den Ausgang 2b gelangt das unter Druck gesetzte Material über Leitung 13 an eine Austragseinheit 3, die im konkreten Ausführungsbeispiel auch lediglich die Düse einer Einheit sein kann, deren Austrittsöffnung 10 über ein taktbar betriebenes Verschlussmittel 11 verschließbar ist. Die Öffnungszeit des Verschlussmittels ist insbesondere kleiner gleich 5 ms, vorzugsweise kleiner gleich 1 ms.

Dem Fachmann sind entsprechende Verschlussmittel hinlänglich bekannt, die auch mit entsprechender Frequenz und entsprechendem Hub zur Erzeugung selbst kleinster Tröpfchen betrieben werden können. Ergänzend versteht sich von selbst, dass die Darstellung in Figur 1 lediglich schematisch ist, sodass die Plastifiziereinheit 1, der Materialspeicher 2 und die Austragseinheit 3 auch in anderer Weise, z.B. auch ohne die Leitung 12 miteinander verbunden sein können. Von Bedeutung ist allerdings, dass der Materialspeicher 2, wie groß oder klein auch immer er ist, unter Druck gesetzt ist und dieses Material vorzugsweise unmittelbar der Austragseinheit 3 zur Verfügung steht.

Die ausgetragenen Tropfen 5 gelangen auf den Objektträger 4 und bauen dort den Gegenstand 6 auf, wobei Steuermittel 9 die Vorrichtung und ihre Teile über die Signalleitungen a, b, c, d, e, f ansteuern. So können z.B. die Steuermittel 9 auch eine Temperiereinheit 8 ansteuern, die für eine entsprechende Beeinflussung des Gegenstandes sorgt, worauf weiter unten noch eingegangen wird.

Im Ausführungsbeispiel bewegt sich der Objektträger 4 in x- und y-Richtung, wesentlich ist jedoch lediglich, dass bedarfsweise eine Relativbewegung zwischen der Austragseinheit 3 und dem Objektträger 4 bzw. dem dort befindlichen Gegenstand 6 erfolgt. Damit können sowohl Austragseinheit 3 als auch Objektträger 4 oder auch nur eines dieser beiden Elemente bewegt werden. Als weitere Bewegungsrichtung steht die Richtung z zur Verfügung, durch die der Abstand s zwischen der Austrittsöffnung 10 und dem Objekt 6 beeinflusst werden kann. Ergänzend ist darauf hinzuweisen, dass abweichend von der in Fig. 1 dargestellten Ausführungsform die z-Richtung durchaus auch horizontal oder in einem anderen Winkel angeordnet sein kann. Bedarfsweise können die Bewegungen auch entlang anderer Koordinatensysteme erfolgen. Der Objektaufbau geschieht vorzugsweise auf der Basis von dreidimensionalen Daten, die als CAD Basis vorliegen und als Steuerparameter aufbereitet sind. Einfachere Systeme sind auch durch einfachere Koordinatensysteme programmierbar, wie z.B. die Herstellung eines Rohres durch Verwendung eines einfachen Drehtisches mit Abstandssteuerung der Austragsdüse oder einem Koordinatentisch für einfache 3D-Teile bis hin zu 5-Achsen Tischen, um komplexe Geometrien anzufertigen.

Verfahrensgemäß wird das verfestigbare Material, das in der fluiden Phase den laminaren Quellfluss aufweist, in der Plastifiziereinheit 1 als plastifiziertes oder plastifizierbares Material in die fluide Phase plastifiziert und aufbereitet. Das aufbereitete verfestigbare Material wird in den Materialspeicher 2 eingebracht, der mindestens eine taktbaren Austragseinheit 3 aufweist. Dazu ist die Plastifiziereinheit 1 an den unter Druck setzbaren Materialspeicher 2 zum Einbringen der fluiden Phase in den Materialspeicher angekoppelt. Dann wird ein Drucks auf die fluide Phase im Materialspeicher 2 mittels einer Druckerzeugungseinheit erzeugt, wobei der Materialspeicher 2 in direkter Kopplung mit der getakteten Austragseinheit 3 steht. Dadurch wird ein Austragen der Tropfen 5 aus einer Austrittsöffnung 10 mittels der Austragseinheit 3 in einen Bauraum 7 für den herzustellenden dreidimensionalen Gegenstand 6 möglich, wobei Bauraum 7 und Austrittsöffnung 10 relativ im Raum zueinander bewegbar sind. In Abhängigkeit der Parameter Druck und Temperatur im Materialspeicher 2 als auch in Abhängigkeit von Öffnungszeit und Geometrie der getakteten Austragseinheit 3 werden so diskontinuierliche Tropfen 5 mit gewünschtem Volumen und gewünschter Fluggeschwindigkeit in Richtung des Bauraumes erzeugt.

Die Plastifiziereinheit 1 kann unmittelbar an den Materialspeicher 2 angekoppelt sein, um den Druck auf die durch die Aufbereitung homogenisierte fluide Phase direkt auszuüben. Einfluss auf die Tropfenbildung hat auch das taktbare Verschlussmittels 11 der Austrittsöffnung 10 gemäß einem Tropfenbildungsprogramm. Dieses Tropfenbildungsprogramm wird durch die Steuermittel 9 beeinflusst, die auch die sonstigen Parameter des Systems steuern und beeinflussen, wobei hierfür eine in Figuren nicht dargestellte Sensorik vorgesehen ist, die eine Erfassung der Einflussparameter erlaubt, die dann über die Steuerung gesteuert und bedarfsweise auch geregelt werden können. Im Rahmen des Tropfenbildungsprogramms können damit zunächst die Einflussparameter des Verschlussmittels, ggf. aber auch andere Parameter in Verbindung mit denen des Verschlussmittels 11 beeinflusst, gesteuert oder geregelt werden. Die Plastifiziereinheit 1 erzeugt vorzugsweise eine Materialschmelze, die im Materialspeicher 2 bereitgestellt wird, wobei ebenfalls vorzugsweise das Material unmittelbar aus der Materialschmelze zur Tropfenerzeugung in die Austragseinheit gelangt.

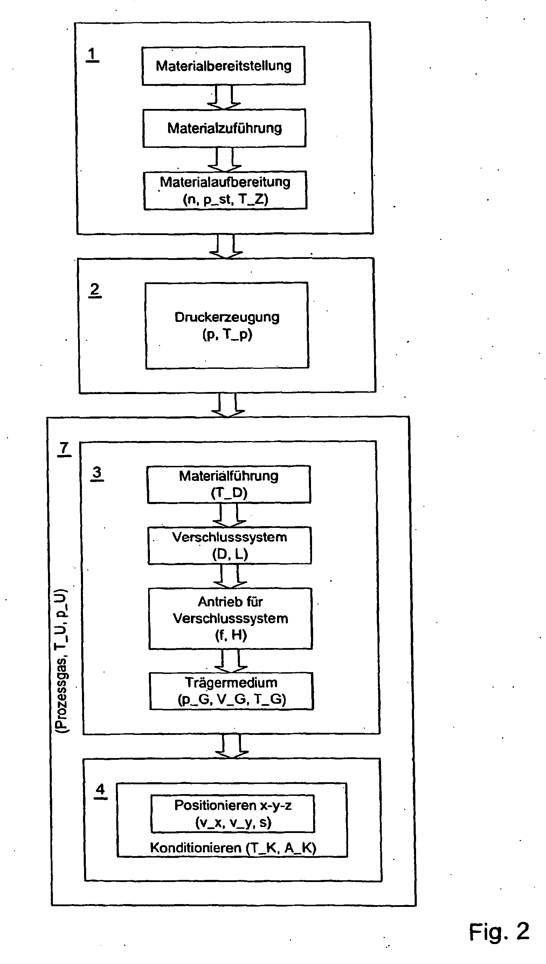

Die Steuermittel 9 beeinflussen z.B. die in Fig. 2 schematisch dargestellten Parameter der einzelnen Einheiten zur Beeinflussung insbesondere der Tropfenform, aber auch der Art ihres Auftreffens oder Erzeugens. Grundsätzlich müssen nicht alle Parameter beeinflusst werden, denn der Fachmann trifft eine geeignete Auswahl, sodass auch eine beliebige Auswahl der im Folgenden genannten Parameter beeinflusst werden kann. Ebenso ist es möglich, z.B. nur einen Parameter in einer Einheit zu beeinflussen, während andere Einheiten gar nicht oder so weit als möglich in sämtlichen Parametern beeinflusst werden.

Z.B. beeinflussen die Steuermittel 9 den Druck p und/oder die Temperatur T_p im Materialspeicher 2 oder die Parameter in der Aufbereitungseinheit bzw. Plastifiziereinheit 1 wie z.B. die dortige Fördergeschwindigkeit v, wobei als Fördermittel eine Kolbenzylindereinheit oder eine Förderschnecke verwendet werden kann, die dann z.B. wiederum in ihrer Drehzahl n beeinflusst wird. Ebenso werden dort der Staudruck p_st und die Temperatur T-Z der Aufbereitungseinheit als Parameter bedarfsweise beeinflusst. Die Steuermittel 9 können auch die Parameter des Verschlussmittels 10 und/oder der Austragseinheit 3 beeinflussen. Diese Parameter umfassen wenigstens einen der Parameter der Temperatur T_D der Materialführung in der Austragseinheit 3 oder an der Austrittsöffnung 10, die Länge L und den Durchmesser D oder den Ringspalt der Austrittsöffnung 10 bzw. Austrittsbohrung, die Frequenz f und den Hub H des Antriebs für das taktbare Verschlussmittel 11 und nicht zuletzt auch Druck p_G, Volumenstrom V_G und Temperatur T_G des Trägermediums in der Austragseinheit 3. Das Trägermedium ist dabei ein Medium, das die Tropfenbildung und das Ablösen der Tropfen aus der Austrittsöffnung unterstützt wie z.B. Luft. Ebenso können die Parameter im Bauraum 7 beeinflusst werden, d.h. im Wesentlichen die Atmosphäre im Bauraum, wozu Art und Zusammensetzung des dort vorhandenen Gases, die Temperatur T_U und der Druck p_U im Bauraum 7 beispielhaft gehören. Ergänzend können die Steuermittel 9 Einfluss nehmen auf die Geschwindigkeit v-x, v-y, mit der Austragseinheit 3 und Objektträger 4 relativ zueinander bewegt werden. Ebenso besteht eine Einflussnahme auf den Abstand s der Austrittsöffnung 10 bzw. der Austragseinheit 3 zum Gegenstand 6 oder zum Objektträger 4. Vorzugsweise wird der Abstand s so gewählt, dass die tropfenförmigen Teile 5 zumindest auf ihrer Flugbahn einen frei fliegenden Tropfen ausbilden. Dadurch lässt sich die Auftreffgeschwindigkeit am Auftragsort beeinflussen. Schließlich beeinflussen die Steuermittel 9 auch z.B. über die Temperatureinheit 8 die Temperatur T_K des aktuellen Auftragsorts oder es kann die Fläche A_K dieses Auftragsorts beeinflusst werden, d.h. der Bereich, in dem konkret die Tropfen auftreffen.

Vorzugsweise erfolgt das Aufbereiten, das Druck Aufbringen und Austragen mittels der Plastifiziereinheit, wie sie in ähnlicher Weise z.B. aus der Spritzgießtechnik bekannt ist. Die Oberfläche des Gegenstandes 6 kann nach Aufbringen der Tropfen 5 nachbearbeitet werden, wozu z.B. die Temperiereinheit 8 verwendet werden kann. Diese Temperiereinheit kann allerdings auch zum schnelleren Aushärten des Materials eingesetzt werden, d.h. nicht nur zum Anlösen und Auflösen von Übergängen zwischen einzelnen tropfenartigen Teilen.

Im Bereich Objektaufbau ist es von Bedeutung, die entsprechende Atmosphäre des Bauraums 7 beeinflussen zu können. Insbesondere kann die Oberflächentemperatur der bereits erzeugten Teilegeometrie beim Wiederauftreffen des nächsten Tropfens entsprechend in der Temperatur beeinflusst werden, z.B. durch gezieltes Kühlen der Oberfläche oder auch durch gezieltes Aufheizen, um die Verbindung entsprechend zu beeinflussen.

In einer bevorzugten Ausführungsform, die zeichnerisch nicht dargestellt ist, jedoch analog zu der in Figur 1 dargestellten Ausführungsform aufgebaut ist, können mehrere Austragseinheiten 3 vorgesehen sein, die parallel bedarfsweise gleichzeitig oder auch zeitversetzt verwendet werden. Diese Austragseinheiten können damit auch verschiedene Materialien austragen, wobei diese Materialien auch so ausgetragen werden können, dass sich die tropfenförmigen Teile dieser Materialien am selben Punkt verbinden. Dadurch können z.B. Materialien, die ansonsten gern zu einem Entmischen neigen, für die Herstellung derartiger Gegenstände verwendet werden.

Versuche mit Düsenbohrungen von 0,5 bis 0,1 mm haben bisher ergeben, dass Tropfen erzeugt werden können. Besitzt das Verschlussmittel eine Nadel, so ist eine Federunterstützung der Nadel erforderlich. Eine Magnetkraft ist bisher zum Zuhalten der Bohrung nicht ausreichend. Der Magnethub wurde mechanisch begrenzt auf 0,2 mm, da sich bei geringer Federvorspannung ein zu weiches Verhalten durch zu langen Hub ergab. Bei einer Massetemperatur von 200 °C an der Düse und 220 °C an der Düsenspitze ergaben sich gute Ergebnisse. Die Tropfen müssen entweder schnell genug oder schwer genug sein, um sich von der Düse abzulösen. Zu leichte Tropfen bleiben an Düsenspitze hängen und lassen sich leicht aufgrund Anfangshaftung mit der Düsenspitze ablenken.

Bei einer 0,3 mm Düse ergab sich ohne Luftunterstützung ein Ablösen der Tropfen ab 900 bis 1000 bar. Selbst dann hatten die Tropfen kaum Initialgeschwindigkeit und taumelten in verschiedene Richtungen weg. Der Tropfendurchmesser betrug 1 bis 1,3 mm. Mit Luftunterstützung von 3,5 bar war ein freies Wegfliegen der Tropfen in vertikaler Richtung auf den Bauraum möglich.

### Bezugszeichenliste

- 1: Aufbereitungseinheit
- 1 a: Auslass
- 2: Druckerzeugungseinheit
- 2a: Einlass
- 2b: Auslass
- 3: Austragseinheit
- 3a: Einlass
- 4: Objektträger
- 5: Tropfenförmiges Teil
- 6: Gegenstand
- 7: Bauraum
- 8: Temperiereinheit
- 9: Steuermittel
- 10: Austrittsöffnung
- 11: Verschlussmittel
- 12,13: Leitung
- a-f: Signalleitung
- x, y, z,: Koordinaten
- n: Schneckendrehzahl
- p_st: Staudruck in 1
- T_Z: Temperatur in 1
- p: Druck in 2
- T_p: Temperatur in 2
- T_D: Temperatur Materialführung Austragseinheit
- D: Durchmesser von 10
- L: Länge von 10
- f: Frequenz von 11
- H: Hub von 11
- p_G: Druck Trägermedium
- V_G: Volumenstrom Trägermedium
- T_G: Temperatur Trägermedium
- v_x, v_y: Geschwindigkeit in x- und y-Richtung
- s: Abstand
- T_K: Temperatur Auftragsort
- A_K: Fläche Auftragsort
- T_U: Temperatur Bauraum
- p_U: Druck im Bauraum

## Patentansprüche

1. Verfahren zur Herstellung eines dreidimensionalen Gegenstandes (6) aus verfestigbarem Material, das entweder im Ausgangszustand als Fluid vorliegt oder verflüssigt werden kann, durch sequentielles Austragen von Tropfen (5) mit den Schritte
- Plastifizieren des verfestigbaren Materials in die fluide Phase,
- Einbringen dieser fluiden Phase in einen Materialspeicher (2) mit mindestens einer taktbaren Austragseinheit (3),
- Austragen der Tropfen (5) aus einer Austrittsöffnung (10) mittels der Austragseinheit (3) in einen Bauraum (7) für den herzustellenden dreidimensionalen Gegenstand (6), wobei Bauraum (7) und Austrittsöffnung (10) relativ im Raum zueinander bewegbar sind,
**gekennzeichnet durch** die Schritte:
- Ankoppeln einer in der Spritzgießtechnik bekannten Plastifiziereinheit (1) an den unter Druck setzbaren Materialspeicher (2) zum Einbringen der fluiden Phase in den Materialspeicher,
- Plastifizieren des verfestigbaren Materials, das in der fluiden Phase einen sogenannten laminaren Quellfluss aufweist, in der Plastifiziereinheit (1) zur Aufbereitung des verfestigbaren Materials in die fluide Phase,
- Erzeugen eines Drucks auf die fluide Phase im Materialspeicher (2), der in direkter Kopplung an die taktbare Austragseinheit (3) in Abhängigkeit der Parameter Druck und Temperatur im Materialspeicher (2) als auch in Abhängigkeit von Öffnungszeit und Geometrie der taktbaren Austragseinheit (3) einen diskontinuierlichen Tropfen (5) mit gewünschtem Volumen und gewünschter Fluggeschwindigkeit in Richtung des Bauraumes erzeugt.

2. Verfahren nach Anspruch 1, **dadurch gekennzeichnet, dass** die Plastifiziereinheit (1) unmittelbar an den Materialspeicher (2) angekoppelt ist und den Druck auf die durch die Aufbereitung homogenisierte fluide Phase ausübt, der in Abhängigkeit der Parameter Druck und Temperatur im Materialspeicher (2) als auch in Abhängigkeit von Öffnungszeit und Geometrie der taktbaren Austragseinheit (3) den diskontinuierlichen Tropfen (5) erzeugt.

3. Verfahren nach Anspruch 1 oder 2, **dadurch gekennzeichnet, dass** die fluide Phase einen laminaren Quellfluss mit Fliessgeschwindigkeiten bis zu 10.000 m/s aufweist.

4. Verfahren nach einem der vorhergehenden Ansprüche, **dadurch gekennzeichnet, dass** die dynamische Viskositätszahl des verfestigbaren Materials zwischen 100 und 10000 [Pa s] liegt, wobei vorzugsweise das verfestigbare Material ein in der Spritzgießtechnik üblicher Kunststoff oder ein Harz ist.

5. Verfahren nach einem der vorhergehenden Ansprüche, **dadurch gekennzeichnet, dass** das gewünschte Volumen des Tropfens (5) im Bereich von 0,01 bis 0,5 mm³, vorzugsweise im Bereich von 0,05 bis 0,3 mm³ und besonders vorzugsweise im Bereich von etwa 0,1 mm³ liegt.

6. Verfahren nach einem der vorhergehenden Ansprüche, **dadurch gekennzeichnet, dass** die Öffnungszeit kleiner gleich 5 ms, vorzugsweise kleiner gleich 1 ms, ist und/oder dass der Durchmesser der Austrittsöffnung (10) kleiner gleich 1mm, vorzugsweise etwa 0,1 mm ist.

7. Verfahren nach einem der vorhergehenden Ansprüche, **dadurch gekennzeichnet, dass** Steuermittel (9) gegebenenfalls unter Einsatz entsprechender Sensoren bedarfsweise wenigstens einen der Parameter
a) der Plastifiziereinheit (1) zum Plastifizieren des verfestigbaren Materials und/oder
b) Druck und/oder Temperatur im Materialspeicher (2) und/oder
c) der Austragseinheit (3) und/oder
d) des Verschlussmittels (11), durch die das verfestigbare Material zur Austrittsöffnung (10) gelangt,
zur Beeinflussung der Tropfenform beeinflussen.

8. Verfahren nach Anspruch 7, **dadurch gekennzeichnet, dass** die Parameter folgende Parameter umfassen:
- Fördergeschwindigkeit des Materials aus der Plastifiziereinheit,
- Druck in der Plastifiziereinheit,
- Temperatur in der Plastifiziereinheit.
- Temperatur von Austragseinheit (3) und/oder Austrittsöffnung (10),
- Durchmesser und/oder Ringspalt der Austrittsöffnung im Bereich des Verschlussmittels (11),
- Länge der Austrittsbohrung,
- Frequenz des Verschlussmittels (11)
- Hub des Verschlussmittels (11),
- Druck des Trägermediums in der Austragseinheit (3),
- Volumenstrom des Trägermediums in der Austragseinheit (3),
- Temperatur des Materials in der Austragseinheit (3)

9. Verfahren nach einem der vorhergehenden Ansprüche, **dadurch gekennzeichnet, dass** Steuermittel (9) gegebenenfalls unter Einsatz entsprechender Sensoren bedarfsweise wenigstens einen der Parameter des Bauraums (7) zur Beeinflussung der Tropfenform beeinflussen, wobei die Parameter des Bauraums (7) vorzugsweise folgende Parameter umfassen:
- Temperatur des Bauraums,
- Druck des Bauraums,
- Atmosphäre des Bauraums,

10. Verfahren nach einem der vorhergehenden Ansprüche, **dadurch gekennzeichnet, dass** Steuermittel (9) bedarfsweise Geschwindigkeit und/oder Richtung beeinflussen, mit der die Austragseinheit (3) und/oder der Objektträger (4) relativ zueinander bewegt werden und/oder dass die Steuermittel (9) bedarfsweise den Abstand (s) der Austrittsöffnung (10) bzw. der Austragseinheit (3) zum Gegenstand (6) oder zum Objektträger (4) beeinflussen, wobei der Abstand (s) vorzugsweise so gewählt wird, dass die Tropfen (5) einen frei fliegenden Tropfen ausbilden, um die Auftreffgeschwindigkeit zu beeinflussen.

11. Verfahren nach einem der vorhergehenden Ansprüche, **dadurch gekennzeichnet, dass** die Steuermittel (9) bedarfsweise wenigstens einen Parameter des aktuellen Auftragsorts zur Beeinflussung der Tropfenform beeinflussen, wobei die Parameter des aktuellen Auftragsorts vorzugsweise folgende Parameter umfassen:
- Temperatur des aktuellen Auftragsorts,
- Fläche des aktuellen Auftragsorts.

12. Verfahren nach einem der vorhergehenden Ansprüche, **dadurch gekennzeichnet, dass** die Oberfläche des Gegenstands (6) zum Anlösen und Auflösen von Übergängen zwischen einzelnen tropfenartigen Teilen mittels einer Temperiereinheit (8) temperierbar ist.

13. Verfahren nach einem der vorhergehenden Ansprüche, **dadurch gekennzeichnet, dass** mehrere Austragseinheiten (3) vorgesehen sind, die gleichzeitig oder zeitversetzt verwendet werden, wobei vorzugsweise die Austragseinheiten (3) verschiedene Materialien austragen und/oder vorzugsweise die Austragseinheiten (3) das Material so auf denselben Punkt austragen, dass die Materialien sich an dem Punkt verbinden.

14. Verwendung einer in der Spritzgießtechnik bekannten Plastifiziereinheit (1) zur Aufbereitung eines verfestigbaren Materials in die fluide Phase zur Herstellung eines dreidimensionalen Gegenstands nach einem Verfahren nach den Ansprüchen 1 bis 13.

15. Verwendung nach Anspruch 14, **dadurch gekennzeichnet, dass** die Plastifiziereinheit (1) unmittelbar an einen unter Druck setzbaren Materialspeicher (2) mit einer taktbaren Austragseinheit (3) angekoppelt ist und den Druck auf die durch die Aufbereitung homogenisierte fluide Phase ausübt, der in Abhängigkeit der Parameter Druck und Temperatur im Materialspeicher (2) als auch in Abhängigkeit von Öffnungszeit und Geometrie der taktbaren Austragseinheit (3) einen diskontinuierlichen Tropfen (5) mit gewünschtem Volumen und gewünschter Fluggeschwindigkeit in Richtung des Bauraumes (7) erzeugt.

16. Vorrichtung zur Herstellung eines dreidimensionalen Gegenstandes (6) aus verfestigbarem Material, das entweder im Ausgangszustand fluid vorliegt oder verflüssigt werden kann, durch sequentielles Austragen von Tropfen (5) mit
- wenigstens einem Bauraum (7) zum Aufbau des Gegenstandes (6),
- wenigstens einer Aufbereitungseinheit zur Aufbereitung des verfestigbaren Materials in die fluide Phase,
- wenigstens einem Materialspeicher (2) für die fluide Phase mit mindestens einer taktbaren Austragseinheit (3),
- wenigstens einer Austragseinheit (3) zum Austragen des verfestigbaren Materials durch eine Austrittsöffnung (10) in Richtung auf den Bauraum (7) für den herzustellenden dreidimensionalen Gegenstand (6), wobei Bauraum (7) und Austrittsöffnung (10) relativ im Raum zueinander bewegbar sind,
- Steuermitteln (9) zur Steuerung der Vorrichtung und ihrer Teiles **dadurch gekennzeichnet, dass**
- die Aufbereitungseinheit eine in der Spritzgießtechnik bekannte Plastifiziereinheit (1) zur Aufbereitung des verfestigbaren Materials als plastifiziertes oder plastifizierbares Material ist, das in der fluiden Phase einen sogenannten laminaren Quellfluss aufweist,
- die Plastifiziereinheit an den unter Druck setzbaren Materialspeicher (2) zum Einbringen der fluiden Phase in den Materialspeicher angekoppelt ist,
- wenigstens eine Druckerzeugungseinheit vorgesehen ist und so angeordnet ist, dass sie Druck auf die fluide Phase im Materialspeicher (2) erzeugt, der in direkter Kopplung an die taktbare Austragseinheit (3) in Abhängigkeit der Parameter Druck und Temperatur im Materialspeicher (2) als auch in Abhängigkeit von Öffnungszeit und Geometrie der taktbaren Austragseinheit (3) einen diskontinuierüchen Tropfen (5) mit gewünschtem Volumen und gewünschter Fluggeschwindigkeit in Richtung des Bauraumes erzeugt.

17. Vorrichtung nach Anspruch 16, **dadurch gekennzeichnet, dass** die Plastifiziereinheit (1) unmittelbar an den unter Druck setzbaren Materialspeicher (2) angekoppelt ist und die Druckerzeugungseinheit bildet, die den Druck auf die fluide Phase ausübt.

18. Vorrichtung nach Anspruch 16 oder 17, **dadurch gekennzeichnet, dass** die Austragseinheit (3) zur Erzeugung von diskontinuierlichen Tropfen (5) wenigstens ein vom Steuermittel (9) gemäß einem Tropfenbildungsprogramm gesteuerte und taktbares Verschlussmittel (11) für die Austrittsöffnung (10) aufweist.

## Claims

1. Method of manufacturing a three-dimensional object (6) from solidifiable material, which is either present in the initial state as a fluid or can be liquefied, by sequential discharging of drops (5) having the steps
- plastifying the solidifiable material into the fluid phase,
- introducing said fluid phase into a material store (2) having at least one clockable discharge unit (3),
- discharging the drops (5) from an outlet aperture (10) by means of the discharge unit (3) into a construction region (7) for the three-dimensional object (6) to be manufactured, wherein construction region (7) and outlet aperture (10) are movable relative to one another in space,
**characterized by** the steps:
- coupling a plastifying unit (1) known in the field of injection moulding to the pressurizable material store (2) in order to introduce the fluid phase into the material store,
- plastifying the solidifiable material, which in the fluid phase displays a so-called laminar source flow, in the plastifying unit (1) in order to process the solidifiable material into the fluid phase,
- generating a pressure on the fluid phase in the material store (2), which in direct coupling to the clockable discharge unit (3) as a function of the parameters pressure and temperature in the material store (2) and as a function of opening time and geometry of the clockable discharge unit (3) produces a discontinuous drop (5) of desired volume and desired speed of travel in the direction of the construction region.

2. Method according to claim 1, **characterized in that** the plastifying unit (1) is coupled directly to the material store (2) and exerts on the fluid phase, which is homogenized by the processing operation, the pressure that as a function of the parameters pressure and temperature in the material store (2) and as a function of opening time and geometry of the clockable discharge unit (3) produces the discontinuous drop (5).

3. Method according to claim 1 or 2, **characterized in that** the fluid phase displays a laminar source flow at flow velocities of up to 10,000 m/s.

4. Method according to one of the preceding claims, **characterized in that** the dynamic viscosity number of the solidifiable material is between 100 and 10,000 [Pa s], wherein preferably the solidifiable material is a plastics material commonly used in injection moulding technology or a resin.

5. Method according to one of the preceding claims, **characterized in that** the desired volume of the drop (5) lies in the region of 0.01 to 0.5 mm³, preferably in the region of 0.05 to 0.3 mm³ and particularly preferably in the region of ca. 0.1 mm³.

6. Method according to one of the preceding claims, **characterized in that** the opening time is less than or equal to 5 ms, preferably less than or equal to 1 ms and/or **in that** the diameter of the outlet aperture (10) is smaller than or equal to 1 mm, preferably ca. 0.1 mm.

7. Method according to one of the preceding claims, **characterized in that** for influencing the drop shape control means (9) optionally using appropriate sensor equipment where necessary influence at least one of the parameters
a) of the plastifying unit (1) for plastifying the solidifiable material and/or
b) pressure and/or temperature in the material store (2) and/or
c) of the discharge unit (3) and/or
d) of the shut-off means (11), through which the solidifiable material passes to the outlet aperture (10) .

8. Method according to claim 7, **characterized in that** the parameters comprise the following parameters:
- delivery rate of the material from the plastifying unit,
- pressure in the plastifying unit,
- temperature in the plastifying unit,
- temperature of discharge unit (3) and/or outlet aperture (10),
- diameter and/or annular gap of the outlet aperture in the region of the shut-off means (11),
- length of the outlet bore,
- frequency of the shut-off means (11),
- stroke of the shut-off means (11),
- pressure of the carrier medium in the discharge unit (3),
- volume flow of the carrier medium in the discharge unit (3).
- temperature of the material in the discharge unit (3).

9. Method according to one of the preceding claims, **characterized in that** control means (9) optionally using appropriate sensor equipment where necessary influence at least one of the parameters of the construction region (7) in order to influence the drop shape, wherein the parameters of the construction region (7) preferably comprise the following parameters:
- temperature of the construction region,
- pressure of the construction region,
- atmosphere of the construction region.

10. Method according to one of the preceding claims, **characterized in that** control means (9) where necessary influence speed and/or direction, at which the discharge unit (3) and/or the object carrier (4) are moved relative to one another, and/or **in that** the control means (9) where necessary influence the spacing (s) of the outlet aperture (10) and/or of the discharge unit (3) relative to the object (6) or to the object carrier (4), wherein the spacing (s) is preferably selected in such a way that the drops (5) form a free-flying drop, in order to influence the impact velocity.

11. Method according to one of the preceding claims, **characterized in that** the control means (9) where necessary influence at least one parameter of the current place of application in order to influence the drop shape, wherein the parameters of the current place of application preferably comprise the following parameters:
- temperature of the current place of application,
- area of the current point of application.

12. Method according to one of the preceding claims, **characterized in that** the surface of the object (6) is temperature-controllable by means of a temperature control unit (8) in order to remove and disperse transitions between individual drop-like parts.

13. Method according to one of the preceding claims, **characterized in that** a plurality of discharge units (3) are provided, which are used simultaneously or in a time-displaced manner, wherein preferably the discharge units (3) discharge different materials and/or preferably the discharge units (3) discharge the material in such a way onto the same point that the materials combine at the point.

14. Use of a plastifying unit (1) known in injection moulding technology to processa solidifiable material into the fluid phase for manufacturing a three-dimensional object according to a method according to claims 1 to 13.

15. Use according to claim 14, **characterized in that** the plastifying unit (1) is coupled directly to a pressurizable material store (2) with a clockable discharge unit (3) and exerts on the fluid phase, which is homogenized by the processing operation, the pressure that as a function of the parameters pressure and temperature in the material store (2) and as a function of opening time and geometry of the clockable discharge unit (3) produces a discontinuous drop (5) of desired volume and desired speed of travel in the direction of the construction region (7).

16. Device for manufacturing a three-dimensional object (6) from solidifiable material, which is either fluid in the initial state or can be liquefied, by sequential discharging of drops (5) having
- at least one construction region (7) for building up the object (6),
- at least one processing unit for processing the solidifiable material into the fluid phase,
- at least one material store (2) for the fluid phase with at least one clockable discharge unit (3),
- at least one discharge unit (3) for discharging the solidifiable material through an outlet aperture (10) in the direction of the construction region (7) for the three-dimensional object (6) to be manufactured, wherein construction region (7) and outlet aperture (10) are movable relative to one another in space,
- control means (9) for controlling the device and the parts thereof,
**characterized in that**
- the processing unit is a plastifying unit known in injection moulding technology for processing the solidifiable material as a plastified or plastifiable material, which in the fluid phase displays a so-called laminar source flow,
- the plastifying unit is coupled to the pressurizable material store (2) for introducing the fluid phase into the material store,
- at least one pressure generating unit is provided and disposed in such a way that it generates a pressure on the fluid phase in the material store (2) that in direct coupling to the clockable discharge unit (3) as a function of the parameters pressure and temperature in the material store (2) and as a function of opening time and geometry of the clockable discharge unit (3) produces a discontinuous drop (5) of desired volume and desired speed of travel in the direction of the construction region.

17. Device according to claim 16, **characterized in that** the plastifying unit (1) is coupled directly to the pressurizable material store (2) and forms the pressure generating unit that exerts the pressure on the fluid phase.

18. Device according to claim 16 or 17, **characterized in that** the discharge unit (3) for producing discontinuous drops (5) has at least one clockable shut-off means (11) for the outlet aperture (10) that is controlled by the control means (9) in accordance with a drop formation program.

## Revendications

1. Procédé de fabrication d'un objet tridimensionnel (6) en un matériau durcissable, qui se présente à l'état initial sous forme liquide ou qui peut être liquéfié, par application séquentielle de gouttes (5), comprenant les étapes suivantes :
- plastification du matériau durcissable en phase fluide,
- introduction de cette phase fluide dans un réservoir de matériau (2) ayant au moins une unité d'application cadençable (3),
- application des gouttes (5) à partir d'un orifice de sortie (10) au moyen de l'unité d'application (3) dans un espace de construction (7) pour l'objet tridimensionnel à fabriquer (6), l'espace de construction (7) et l'orifice de sortie (10) étant déplaçables l'un par rapport à l'autre dans l'espace,
**caractérisé par** les étapes suivantes:
- couplage d'une unité de plastification (1) connue dans la technique du moulage par injection au réservoir de matériau (2) susceptible d'être mis sous pression pour amener la phase fluide dans le réservoir de matériau,
- plastification du matériau durcissable, qui présente ce qu'on appelle un écoulement laminaire en phase fluide, dans l'unité de plastification (1) pour la préparation du matériau durcissable en phase fluide,
- application d'une pression sur la phase fluide dans le réservoir à matériau (2), laquelle pression produit en couplage direct avec l'unité d'application (3) cadençable, en fonction des paramètres de pression et de température dans le réservoir de matériau (2) ainsi qu'en fonction du temps d'ouverture et de la géométrie de l'unité d'application cadençable (3), un égouttement discontinu (5) avec un volume souhaité et une vitesse d'écoulement souhaitée dans la direction de l'espace de construction.

2. Procédé selon la revendication 1, **caractérisé en ce que** l'unité de plastification (1) est couplée directement au réservoir de matériau (2) et exerce la pression sur la phase fluide homogénéisée par la préparation, laquelle pression produit, en fonction des paramètres de pression et de température dans le réservoir de matériau (2) ainsi qu'en fonction du temps d'ouverture et de la géométrie de l'unité d'application cadençable (3), l'égouttement discontinu (3).

3. Procédé selon la revendication 1 ou 2, **caractérisé en ce que** la phase fluide présente un écoulement laminaire avec une vitesse d'écoulement allant jusqu'à 10 000 m/s.

4. Procédé selon l'une quelconque des revendications précédentes, **caractérisé en ce que** la viscosité dynamique du matériau durcissable est comprise entre 100 et 10 000 Pa.s, le matériau durcissable étant de préférence un matériau plastique habituel dans la technique du moulage par injection ou une résine.

5. Procédé selon l'une quelconque des revendications précédentes, **caractérisé en ce que** le volume souhaité de l'égouttement (5) se situe dans la plage allant de 0,01 à 0,5 mm³, de préférence dans la plage allant de 0,05 à 0,3 mm³ et est en particulier de l'ordre de 0,1 mm³.

6. Procédé selon l'une quelconque des revendications précédentes, **caractérisé en ce que** le temps d'ouverture est inférieur ou égal à 5 ms, de préférence inférieur ou égal à 1 ms et/ou le diamètre de l'orifice d'ouverture (10) est inférieur ou égal à 1 mm et est de préférence d'environ 0,1 mm.

7. Procédé selon l'une quelconque des revendications précédentes, **caractérisé en ce que** des moyen de commande (9) influent, le cas échéant par utilisation de détecteurs correspondants, au besoin sur au moins l'un des paramètres :
a) de l'unité de plastification (1) pour plastifier le matériau durcissable et/ou,
b) la pression et/ou la température du réservoir de matériau (2) et/ou
c) de l'unité d'application (3) et/ou
d) du moyen de fermeture (11), à travers lequel le matériau durcissable arrive à l'orifice de sortie (10), afin d'influencer la forme des gouttes.

8. Procédé selon la revendication 7, **caractérisé en ce que** les paramètres comprennent les paramètres suivantes :
- la vitesse d'amenée du matériau sortant de l'unité de plastification,
- la pression dans l'unité de plastification,
- la température dans l'unité de plastification,
- la température de l'unité d'application (3) et/ou de 'orifice de sortie (10),
- le diamètre et/ou l'ouverture annulaire de l'orifice de sortie dans la zone du moyen de fermeture (11),
- la longueur de l'ouverture de sortie,
- la fréquence du moyen de fermeture (11),
- la course du moyen de fermeture (11),
- la pression du milieu support dans l'unité d'application (3),
- le courant volumétrique du milieu support dans l'unité d'application (3),
- la température du matériau dans l'unité d'application (3).

9. Procédé selon l'une quelconque des revendications précédentes, **caractérisé en ce que** des moyens de commande (9) influent, le cas échéant par utilisation de détecteurs correspondants, au besoin au moins un des paramètres de l'espace de construction (7) pour influencer la forme des gouttes, les paramètres de l'espace de construction (7) comprenant de préférence les paramètres suivantes :
- la température de l'espace de construction,
- la pression de l'espace de construction,
- l'atmosphère de l'espace de construction.

10. Procédé selon l'une quelconque des revendications précédentes, **caractérisé en ce que** des moyens de commande (9) influent au besoin sur la vitesse et/ou la direction et avec lesquels l'unité d'application (3) et/ou le support d'objet (4) peuvent être déplacés l'un par rapport à l'autre et/ou **en ce que** les moyens de commande (9) influent au besoin sur la distance de l'orifice de sortie (10) ou de l'unité d'application (3) par rapport à l'objet (6) ou au support d'objet (4), la distance étant de préférence choisie de telle sorte que les gouttes (5) forment un égouttement coulant librement, afin d'influencer la vitesse de rencontre.

11. Procédé selon l'une quelconque des revendications précédentes, **caractérisé en ce que** les moyens de commande (9) influent au besoin sur au moins un paramètre du lieu d'application courant, pour influencer la forme des gouttes, les paramètres du lieu d'application courant comprenant de préférence les paramètres suivantes :
- température du lieu de départ courant,
- la surface du lieu d'application courant.

12. Procédé selon l'une quelconque des revendications précédentes, **caractérisé en ce que** la surface de l'objet (6) est susceptible d'être chambrée au moyen d'une unité de chambrage (8), pour déclencher et provoquer des transitions entre les particules individuelles en forme de goutte.

13. Procédé selon l'une quelconque des revendications précédentes, **caractérisé en ce que** plusieurs unités d'application (3) sont prévues et utilisées en même temps ou en différé, les unités d'application (3) appliquant des matériaux différents et/ou de préférence les unités d'application (3) appliquant le matériau sur le même point, de telle sorte que les matériaux se lient sur ce point.

14. Utilisation d'une unité de plastification (1) connue dans la technique de moulage par injection pour la préparation d'un matériau durcissable en phase fluide, pour la préparation d'un objet tridimensionnel suivant un procédé selon les revendications 1 à 13.

15. Utilisation selon la revendication 14, **caractérisée en ce que** l'unité de plastification (1) est couplée directement à un réservoir (2) susceptible d'être mis sous pression avec une unité d'application cadençable (3) et exerce la pression sur la phase fluide homogénéisée par la préparation, laquelle pression, en fonction des paramètres pression et température dans le réservoir de matériau (2) ainsi qu'en fonction du temps d'ouverture et de la géométrie de l'unité d'application cadençable (3), produit un égouttement discontinu (5) ayant un volume souhaité et une vitesse d'écoulement souhaitée dans la direction de l'espace de construction (7).

16. Dispositif pour la fabrication d'un objet tridimensionnel (6) à partir d'un matériau durcissable qui se présente à l'état initial sous forme de fluide ou peut être fluidifié, par application séquentielle de gouttes (5), comprenant :
- au moins un espace de construction (7) pour la construction de l'objet (6),
- au moins une unité de préparation pour la préparation du matériau durcissable en phase fluide,
- au moins un réservoir de matériau (2) pour la phase fluide avec au moins une unité d'application cadençable (3),
- au moins une unité d'application (3) pour l'application du matériau durcissable à travers un orifice de sortie (10) dans la direction de l'espace de construction (7) pour l'objet tridimensionnel à fabriquer, l'espace de construction (7) et l'orifice de sortie (10) étant déplaçables dans l'espace l'un par rapport à l'autre,
- des moyens de commande (9) pour la commande du dispositif et des ses composants,
**caractérisé en ce que :**
- l'unité de préparation est une unité de plastification (1) connue dans la technique du moulage par injection pour la préparation du matériau durcissable sous forme de matériau plastifié ou plastifiable, lequel présente en phase fluide ce qu'on appelle un écoulement laminaire,
- l'unité de plastification est couplée au réservoir (2) susceptible d'être mis sous pression pour amener la phase fluide dans le réservoir de matériau,
- au moins une unité de production de pression est prévue et disposée de telle sorte qu'elle exerce une pression sur la phase fluide dans le réservoir de matériau (2), lequel produit, en couplage direct avec l'unité d'application cadençable (3), en fonction des paramètres pression et température dans le réservoir de matériau (2), ainsi qu'en fonction du temps d'ouverture et de la géométrie de l'unité d'application cadençable (3), un égouttement discontinu (5) avec un volume souhaité et une vitesse d'égouttement souhaitée dans la direction de l'espace de construction.

17. Dispositif selon la revendication 16, **caractérisé en ce que** l'unité de plastification (1) est couplée directement au réservoir (2) susceptible d'être mis sous pression et forme l'unité de production de pression qui exerce la pression sur la phase fluide.

18. Dispositif selon la revendication 16 ou 17, **caractérisé en ce que** l'unité d'application (3) présente pour la production d'un égouttement discontinu (5) au moins un moyen de fermeture (11) pour l'orifice de sortie (11) cadençable, commandé par un moyen de commande (9) suivant un programme de formation de gouttes.
